# FASCICULE DE BREVET EUROPEEN

(11) **EP 2 929 104 B1**
(45) Date de publication et mention de la délivrance du brevet: **02.01.2019**
(21) Numéro de dépôt: 13824186.4
(22) Date de dépôt: 10.12.2013
(51) Int. Cl.: E04C 3/29, E04C 3/28

(54) **PROFILE A PORTION(S) EN U, ELEMENT DE STRUCTURE PORTEUSE D'UN VEHICULE L'INCORPORANT ET PROCEDE DE FABRICATION DU PROFILE.**
PROFIL MIT EINEM ODER MEHREREN U-FÖRMIGEN TEILEN, LASTENTRAGENDES STRUKTURELEMENT EINES FAHRZEUGS DAMIT UND VERFAHREN ZUR HERSTELLUNG DES PROFILS
PROFILE WITH U-SHAPED PORTION(S), LOAD-BEARING STRUCTURAL ELEMENT OF A VEHICLE INCORPORATING SAME, AND METHOD FOR MANUFACTURING THE PROFILE

(30) Priorité: 10.12.2012 FR 1261826
(43) Date de publication de la demande: 14.10.2015
(73) Titulaire: Hutchinson, 75008 Paris (FR)
(72) Inventeur: GODON, Michaël, 18350 NEUVY DE CLOCHER (FR); BERGERE, Stéphane, F-45650 Saint Jean Le Blanc (FR); FLORENTZ, Bertrand, F-45200 Paucourt (FR); CIOLCZYK, Jean-Pierre, F-45200 Montargis (FR)
(74) Mandataire: Gevers & Orès
(86) Numéro de dépôt international: PCT/IB2013/060772
(87) Numéro de publication internationale: WO 2014/091402

(56) Documents cités:
- EP-A- 0 995 668
- EP-A- 1 084 816
- WO-A-01/28845
- DE-A1-102005 057 181
- DE-A1-102010 014 503

## Description

La présente invention concerne un profilé à portion(s) de section sensiblement en « U » localement pourvue(s) de moyens de rigidification en torsion et éventuellement en flexion, un élément de structure porteuse d'un véhicule incorporant ce profilé, et un procédé de fabrication de ce profilé. L'invention s'applique à un tel profilé composite plastique pour un élément de structure porteuse pour tout type de véhicule nécessitant un allégement pour des économies d'énergie ou pour l'amélioration de ses performances, en particulier pour une aérostructure d'avion (e.g. supports de planchers, lisses de fuselages, raidisseurs d'extrados ou d'intrados dans les ailes), pour un châssis autoporteur de véhicule automobile ou autre comprenant des raidisseurs structuraux (e.g. longerons, traverses, renforts, bielles), ou pour une grille de support d'un système électrique et/ou hydraulique notamment dans les domaines aéronautique, automobile, naval, ferroviaire ou dans le bâtiment.

Il est connu dans les véhicules aériens et spatiaux de fixer des harnais électriques et/ou des circuits de transfert de fluide sur une grille dont les traverses comprennent des profilés métalliques ou non, typiquement réalisés en un matériau composite à matrice thermoplastique. Généralement, ces profilés doivent présenter une souplesse locale ou globale en torsion et en flexion, et doivent être rigidifiés pour satisfaire aux exigences de robustesse des grilles les incorporant mais tout en conservant un compromis satisfaisant entre masse et rigidité obtenue.

Ces profilés composites pour de telles grilles de support sont le plus souvent constitués d'une multitude de couches ou plis de composites à matrice thermoplastique renforcée par des tissus de carbone et de verre, et leur rigidification est par exemple obtenue par l'ajout de plis supplémentaires orientés suivant la direction de souplesse observée.

Un inconvénient majeur de ces profilés ainsi rigidifiés réside dans l'augmentation considérable de leur épaisseur et donc de leur masse, qui pénalise le compromis masse-rigidité précité.

Le document DE 10 2005 057 181 A1 décrit un profilé selon le préambule de la revendication 1. Un but de la présente invention est de proposer un profilé comprenant au moins une portion de section transversale sensiblement en « U » qui présente une gorge délimitée par deux ailes et une âme les reliant entre elles et qui est localement pourvue de moyens aptes à la rigidifier en torsion, le profilé étant constitué d'un composite plastique renforcé par des fibres et ces moyens de rigidification locale comprenant au moins un croisillon formé dans cette gorge d'un seul tenant avec ces ailes et cette âme, qui remédie à ces inconvénients en proposant une innovante séparation des fonctions permettant notamment d'alléger ce profilé.

A cet effet, un profilé selon l'invention est tel que lesdites ailes et ladite âme sont renforcées par des fibres par exemple continues très majoritairement orientées dans la direction longitudinale du profilé, avec plus de 60 % de ces fibres qui sont orientées suivant une direction faisant un angle compris entre -30° et +30° avec ladite direction longitudinale (i.e. avec la direction axiale de ladite portion en « U » pouvant être confondue avec l'axe du profilé).

On notera que ces moyens de rigidification au moins en torsion selon l'invention requièrent uniquement un ajout de matière local, ce qui permet de conserver une masse réduite pour le profilé.

Selon une autre caractéristique de l'invention, ledit au moins un croisillon peut comporter au moins deux nervures de rigidification en torsion, qui s'étendent dans des plans sensiblement perpendiculaires au plan de ladite âme sensiblement sur toute la hauteur de ladite gorge.

Selon un mode avantageux de réalisation de l'invention, lesdites nervures présentent une intersection mutuelle en une zone médiane dudit au moins un croisillon, lequel présente sensiblement une forme de « X » dont les pointes sont solidaires desdites ailes, dans le but de rigidifier localement en torsion le profilé comme indiqué ci-dessus.

Avantageusement, ladite au moins une portion peut présenter une pluralité de dits croisillons longitudinalement espacés qui sont en outre aptes à rigidifier cette portion en flexion, ces croisillons n'étant pas reliés les uns aux autres. En d'autres termes, ces croisillons qui se succèdent sans aucune liaison entre eux sont aptes à rigidifier le profilé majoritairement en torsion et accessoirement en flexion.

On notera que ces croisillons sont de préférence situés en des zones du profilé présentant une souplesse en torsion et/ou en flexion (i.e. en pliage) importante.

Selon une autre caractéristique préférentielle de l'invention, ledit profilé est constitué dudit composite qui est à matrice thermoplastique, ledit au moins un croisillon étant formé d'un seul tenant avec ladite au moins une portion par surmoulage, moulage par exemple par bi-injection, par compression ou en vrac (« bulk molding » en anglais), soudage ou collage, à titre non limitatif (étant précisé que d'autres techniques de solidarisation d'un seul tenant du profilé avec le(s) croisillon(s) peuvent être utilisées).

On notera que ce(s) croisillon(s) selon l'invention peu(ven)t être chargé(s) ou non de renfort.

De préférence, ladite au moins une portion est constituée d'un premier composite à matrice thermoplastique, ledit au moins un croisillon étant surmoulé sur cette portion et étant constitué d'un second composite à matrice thermoplastique chimiquement compatible avec la matrice du premier composite, ces matrices étant de préférence choisies dans le groupe constitué par les polysulfures de phénylène (PPS), les polyéther-éther-cétone (PEEK), les polyéther-cétone-cétone (PEKK), les polyamides (PA), les polyéther-imide (PEI) et leurs mélanges.

Avantageusement, ledit premier composite est renforcé par lesdites fibres qui sont majoritairement orientées dans la direction longitudinale du profilé et qui sont des fibres continues ou bien des fibres longues (typiquement de plusieurs centimètres de longueur), de sorte à accroître la rigidité en flexion du profilé en minimisant sa masse.

A titre encore plus préférentiel :
- ledit premier composite comprend un empilement de feuilles pré-imprégnées de la matrice thermoplastique et renforcées par des tissus de carbone, l'empilement se terminant en une surface interne de ladite gorge par une feuille à base de cette même matrice et chargée de tissu(s) de verre, et
- ledit second composite est renforcé par des fibres de verre ou de carbone, de préférence des fibres courtes de verre ou de carbone.

Avantageusement, ledit second composite qui est surmoulé sur ladite au moins une portion peut recouvrir en outre par ce surmoulage des bords ou bordures longitudinaux et/ou transversaux du profilé, de sorte à masquer des fibres apparentes sur ces bords.

On notera que sans ce recouvrement et ce masquage des fibres en résultant, des traitements ultérieurs de protection contre l'humidité seraient nécessaires, ce qu'évite ainsi la présente invention.

Selon une autre caractéristique de l'invention, ledit profilé peut être constitué d'une unique dite portion sensiblement en « U » dont lesdites ailes se terminent sensiblement à angle droit par deux rebords respectifs s'étendant à l'opposé l'un de l'autre, ces rebords étant pourvus de moyens de fixation tels que des équerres à un support recevant le profilé, de sorte que ce support et le profilé le surmontant forment une traverse d'une grille apte à supporter un circuit de fluide et/ou un harnais électrique.

Avantageusement, lesdits moyens de fixation peuvent comprendre des paires d'équerres s'étendant en vis-à-vis à partir desdits rebords, les deux équerres de chacune desdites paires pouvant être reliées entre elles par un voile transversal de préférence surmoulé qui rigidifie ces équerres.

Encore plus avantageusement, l'un au moins de ces voiles transversaux de rigidification supporte un collier de fixation par serrage d'un organe tel qu'un tuyau ou un toron de câbles, ce collier étant de préférence surmoulé d'un seul tenant avec le voile le supportant.

Egalement avantageusement, ledit second composite surmoulé sur ladite au moins une portion peut former en outre par ce surmoulage des zones d'appui telles que des bossages sous lesdits moyens de fixation du profilé, ces zones d'appui étant aptes à caler le profilé sur une autre pièce similaire.

On notera que cette matière ainsi surmoulée sur la surface externe du profilé permet avantageusement de réduire de manière significative le poids et le coût de fabrication global de la pièce.

Un élément de structure porteuse d'un véhicule selon l'invention, cet élément étant par exemple comme expliqué plus haut un longeron, une traverse, un raidisseur structural ou une grille apte à supporter un circuit de fluide et/ou un harnais électrique (en particulier dans un véhicule aérien, spatial ou terrestre), et comprenant des longerons et des traverses, est caractérisé en ce qu'il comporte ce profilé tel que défini ci-dessus de préférence en relation avec lesdites matières composites à matrice thermoplastique pour ladite au moins une portion sensiblement en « U ».

Un procédé de fabrication selon l'invention d'un profilé tel que défini ci-dessus comprend une solidarisation dudit au moins un croisillon avec ladite au moins une portion sensiblement en « U » par surmoulage, moulage, soudage ou collage.

Avantageusement dans le cas préférentiel où ce profilé est réalisé en matière(s) thermoplastique(s) ou composite(s) à matrice thermoplastique, ladite au moins une portion sensiblement en « U » est façonnée par estampage ou via un moulage par compression, et ledit au moins un croisillon est solidarisé avec cette portion par surmoulage ou par moulage par exemple par bi-injection, compression ou en vrac (« bulk molding »).

D'autres caractéristiques, avantages et détails de la présente invention ressortiront à la lecture de la description suivante d'un exemple de réalisation de l'invention donné à titre illustratif et non limitatif, cette description étant réalisée en référence avec les dessins joints, parmi lesquels :
la figure 1 est une vue schématique de dessus et en perspective d'une traverse de grille selon l'art antérieur, destinée à supporter un circuit de fluide et un harnais électrique d'un avion et constituée d'un profilé fixé sur un support,
la figure 2 est une vue schématique de dessus et en perspective d'une traverse de grille selon l'invention, constituée d'un profilé de l'invention pourvu de croisillons de rigidification et fixé sur le support de la figure 1,
la figure 3 est une vue de dessus en perspective à plus grande échelle d'un profilé de l'invention du type de celui inclus dans la traverse de la figure 2,
la figure 4 est une vue de dessous en perspective du profilé de la figure 3,
la figure 4a est une vue de dessus en perspective illustrant de manière détaillée la localisation et la structure de chaque croisillon de rigidification du profilé des figures 2 à 4,
la figure 5 est une vue schématique de dessus et en perspective d'un élément d'un autre profilé selon l'invention, et
la figure 6 est une vue schématique de dessus et en perspective d'un autre élément d'un autre profilé selon l'invention.

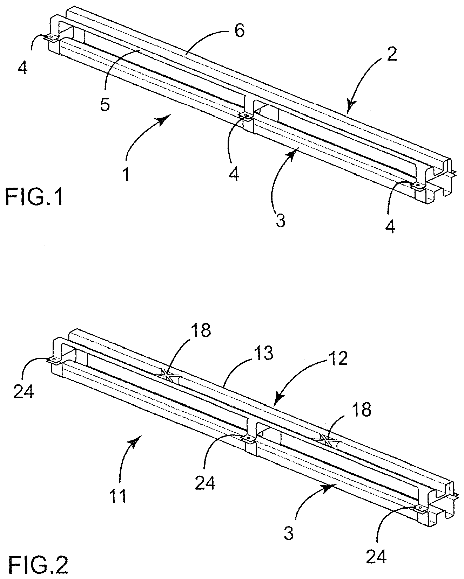

La traverse 1 de grille (ou plus généralement d'un élément de structure porteuse tel qu'un raidisseur) selon l'art antérieur illustrée à la figure 1 est constituée d'un profilé connu 2 de section en U qui est par exemple réalisé en matériau composite à matrice thermoplastique et qui est fixé sur un support inférieur 3 de géométrie analogue, par l'intermédiaire d'équerres de fixation 4 s'étendant de part et d'autre des deux ailes 5 et 6 du U en des rebords respectifs de celles-ci et solidarisées par exemple par boulonnage avec ce support 3. Le profilé 2 est rigidifié en torsion et en flexion de par sa structure intrinsèque à base de couches de composites thermoplastiques renforcés par des tissus de carbone et de verre complétés par des plis orientés, ce qui pénalise la masse du profilé 2.

La traverse 11 de grille (ou plus généralement d'un élément de structure porteuse tel qu'un raidisseur) selon l'invention illustrée à la figure 2 se différencie de celle de la figure 1 par la structure et les matériaux utilisés pour son profilé 12, le support 3 étant dans cet exemple inchangé.

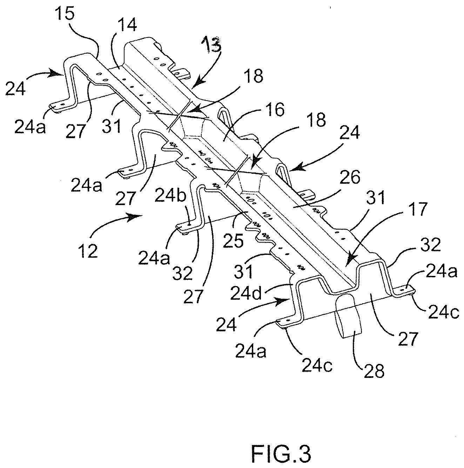

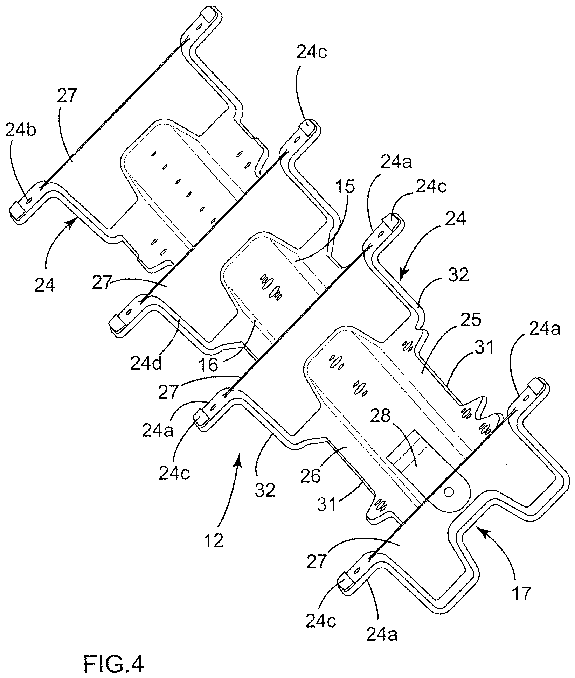

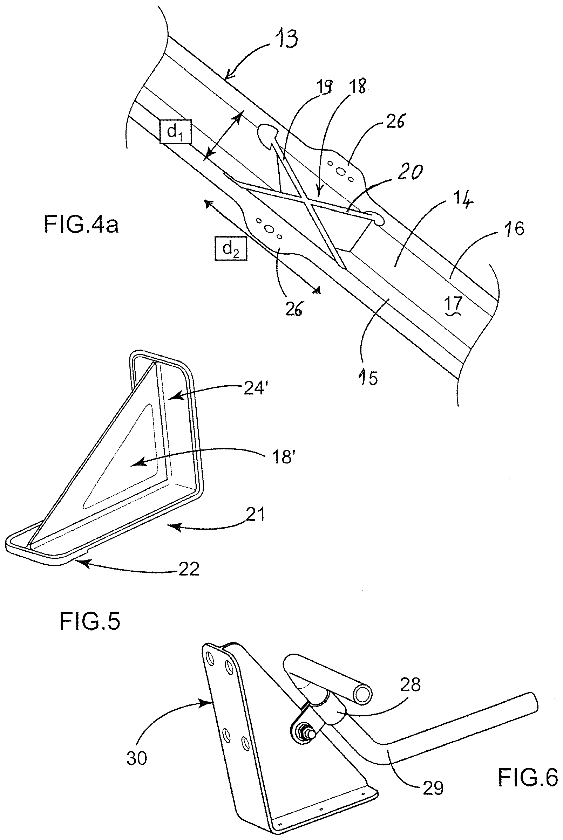

Le profilé 12 illustré en détail aux figures 3, 4 et 4a est dans cet exemple obtenu via un surmoulage de la portion 13 en U du profilé (réalisée en un premier composite à matrice thermoplastique), par sur-injection au contact de l'âme 14 et des ailes 15 et 16 de la gorge 17 du U d'un second composite à matrice thermoplastique chimiquement compatible avec celle du premier composite de sorte à former plusieurs croisillons 18. Ces derniers sont ainsi longitudinalement espacés dans la gorge 17 et formés d'une seule pièce avec celle-ci, et assurent une rigidification locale du profilé 12 essentiellement en torsion (en partie également en flexion).

Seulement deux croisillons 18 sont illustrés dans l'exemple des figures 2 et 3, étant précisé que l'on pourrait prévoir un nombre supérieur de croisillons 18 et/ou un espacement différent entre ceux-ci, ainsi qu'éventuellement des croisillons de géométries différentes le long de la gorge 17, voire une suite alternée ou non de croisillons 18 et d'une ou plusieurs nervures de rigidification ne formant pas de tels croisillons 18.

Comme visible à la figure 4a, chacun des croisillons 18 est formé de l'intersection suivant un angle aigu de deux nervures 19 et 20 perpendiculaires au fond 14 de la gorge 17 et de hauteur égale à celle de cette dernière, et il peut présenter une forme de croix de Saint-André aplatie, i.e. de largeur transversale d₁ égale à celle de la gorge 17 et nettement inférieure à sa dimension longitudinale d₂. En d'autres termes, chaque croisillon 18 définit quatre dièdres deux à deux identiques, dont deux dièdres aigus sont ouverts sur la gorge 17 et deux dièdres obtus sont fermés par les ailes 15 et 16 sur lesquelles ils aboutissent. Uniquement à titre d'exemple, chaque croisillon 18 peut ainsi présenter une longueur d₂ supérieure à trois fois sa largeur transversale d₁, par exemple égale à quatre fois cette dernière (e.g. une largeur d₁ de 25 mm pour une longueur d₂ de 100 mm).

A titre de composite thermoplastique utilisable pour la portion 13 en U du profilé 12, on peut par exemple utiliser un empilement de feuilles pré-imprégnées de PPS (ou par exemple de PA dans l'automobile) renforcées à coeur de tissus de carbone (par exemple avec un taux de fibres supérieur à 50 % en volume de carbone) et se terminant en une surface interne de la gorge 17 par un pli de PPS chargé de tissus de verre (par exemple selon 47,5 % en volume de verre). Cette portion 13 en U du profilé 12 est de préférence réalisée par estampage ou moulage-compression.

A titre de composite thermoplastique utilisable pour chaque croisillon de rigidification 18 sur-injecté au contact de cette surface interne de la gorge 17, on peut par exemple utiliser un PPS (ou par exemple du PA dans l'automobile) chargé à sensiblement plus de 40 % en volume de fibres courtes de verre ou de carbone, ou toute autre matrice thermoplastique identique ou compatible avec celle de la portion 13.

Comme visible aux figures 3 et 4, les ailes 15 et 16 du profilé 12 se prolongent à angle droit par des rebords 25 et 26, lesquels sont pourvus à intervalles réguliers et latéralement en vis-à-vis de paires d'équerres 24 (formées de pattes en « L ») de fixation au support 3 de la figure 2. La patte inférieure 24a du « L » formant chaque équerre 24 est pourvue d'un orifice 24b de fixation au support 3 et, sur la face inférieure de cette patte 24a, d'un bossage surmoulé 24c définissant une zone d'appui sur une autre pièce sous-jacente. Chaque bossage 24c est avantageusement obtenu par la sur-injection dudit second composite.

Les deux équerres 24 de chaque paire sont reliées entre elles par un voile plan transversal 27 également surmoulé qui rigidifie ces équerres 24. Chaque voile 27 épouse le profil transversal de la face inférieure de la gorge 17 en recouvrant les faces externes respectives de la patte supérieure 24d de chaque équerre 24, des rebords 25 et 26, de l'âme 14 et des ailes 15 et 16 du profilé 12.

Avantageusement, on peut pourvoir l'un au moins des voiles 27 d'extrémité du profilé 12 d'un collier de fixation par serrage 28 d'un organe 29 tel qu'un tuyau ou un toron de câbles dont une reprise est nécessaire (cet organe 29 est montré à la figure 6 solidaire d'un autre élément 30 de type équerre ou nervure d'un profilé selon une variante de l'invention), ce collier 28 étant de préférence surmoulé en même temps que ce voile 27. Ainsi, le voile 27 des figures 3 et 4 et l'équerre 30 de la figure 6 exercent chacun la double fonction de raidisseur (par la nervure constituée du voile 27 ou de l'équerre 30) et de support du collier de serrage 28.

Le profilé 12 selon l'invention visible aux figures 3 et 4 présente en outre des bords longitudinaux et transversaux recouverts de bordures surmoulées longitudinales 31 (sur les rebords 25 et 26) et transversales 32 (au moins sur les équerres de fixation 24) qui sont destinées à masquer les fibres apparentes dudit premier composite et qui sont avantageusement obtenues par la sur-injection dudit second composite.

On a par ailleurs illustré à la figure 5 le masquage possible des fibres apparentes sur la surface externe d'une équerre 24' d'un autre profilé selon l'invention, cette équerre 24' étant rigidifiée par une nervure 18', via la sur-injection dudit second composite venant recouvrir en outre des bords 21 de cette surface, ainsi que la réalisation par cette sur-injection d'un bossage d'appui 22 sur cette surface pour caler le profilé 12 sur une autre pièce similaire.

On notera que le profilé 12 intégrant les croisillons de rigidification 18 en torsion et en flexion ainsi obtenu est non seulement un élément de structure mais permet la fixation de systèmes électriques et hydrauliques, une fois ce profilé 12 assemblé sur le support 3 via ses équerres de fixation 24 (voir figures 3 et 4).

La Demanderesse a réalisé des calculs de mode propre de la traverse 11 de la figure 2 incluant ce profilé 12 à croisillons 18 de rigidification locale selon l'invention, en comparaison de la traverse 1 de la figure 1 à profilé 2 dépourvu de tout croisillon 18 de rigidification locale.

La traverse 11 à profilé 12 de la figure 2 présentait ainsi une fréquence propre égale à 23,25 Hz par rapport à la fréquence propre de 17,16 Hz de la traverse 1 de la figure 1, ce qui est une fréquence avantageusement supérieure à la limite souhaitée de 23 Hz dans cet exemple.

## Revendications

1. Profilé (12) comprenant au moins une portion (13) de section transversale sensiblement en « U » qui présente une gorge (17) délimitée par deux ailes (15 et 16) et une âme (14) les reliant entre elles et qui est localement pourvue de moyens aptes à la rigidifier en torsion (18), le profilé étant constitué d'un composite plastique renforcé par des fibres, ces moyens de rigidification locale comprenant au moins un croisillon (18) formé dans cette gorge d'un seul tenant avec ces ailes et cette âme, **caractérisé en ce que** lesdites ailes et ladite âme sont renforcées par des fibres majoritairement orientées dans la direction longitudinale du profilé, avec plus de 60 % de ces fibres qui sont orientées suivant une direction faisant un angle compris entre -30° et +30° avec ladite direction longitudinale.

2. Profilé (12) selon la revendication 1, **caractérisé en ce que** ledit au moins un croisillon (18) comporte au moins deux nervures (19 et 20) de rigidification en torsion, qui s'étendent dans des plans sensiblement perpendiculaires au plan de ladite âme (14) sensiblement sur toute la hauteur de ladite gorge (17), et de préférence **en ce que** lesdites nervures (19 et 20) présentent une intersection mutuelle en une zone médiane dudit au moins un croisillon (18), lequel présente sensiblement une forme de «X» dont les pointes sont solidaires desdites ailes (15 et 16).

3. Profilé (12) selon une des revendications précédentes, **caractérisé en ce que** ladite au moins une portion (13) présente une pluralité de dits croisillons (18) longitudinalement espacés qui sont en outre aptes à rigidifier cette portion en flexion, ces croisillons n'étant pas reliés les uns aux autres.

4. Profilé (12) selon une des revendications précédentes, **caractérisé en ce qu'**il est constitué dudit composite qui est à matrice thermoplastique, ledit au moins un croisillon (18) étant formé d'un seul tenant avec ladite au moins une portion (13) par surmoulage, moulage par exemple par bi-injection, par compression, soudage ou collage.

5. Profilé (12) selon la revendication 4, **caractérisé en ce que** ladite au moins une portion (13) est constituée d'un premier composite à matrice thermoplastique, ledit au moins un croisillon (18) étant surmoulé sur cette portion et étant constitué d'un second composite à matrice thermoplastique chimiquement compatible avec la matrice du premier composite, ces matrices étant de préférence choisies dans le groupe constitué par les polysulfures de phénylène (PPS), les polyéther-éther-cétone (PEEK), les polyéther-cétone-cétone (PEKK), les polyamides (PA), les polyéther-imide (PEI) et leurs mélanges.

6. Profilé (12) selon la revendication 5, **caractérisé en ce que** ledit premier composite est renforcé par lesdites fibres qui sont majoritairement orientées dans la direction longitudinale du profilé et qui sont des fibres continues ou bien des fibres longues de plusieurs centimètres de longueur, de sorte à accroître la rigidité en flexion du profilé en minimisant sa masse.

7. Profilé (12) selon la revendication 5 ou 6, **caractérisé en ce que** :
- ledit premier composite comprend un empilement de feuilles pré-imprégnées de ladite matrice thermoplastique et renforcées par des tissus de carbone, cet empilement se terminant en une surface interne de ladite gorge (17) par une feuille à base de cette même matrice et chargée de tissu(s) de verre, et **en ce que**
- ledit second composite est renforcé par des fibres de verre ou de carbone, de préférence courtes.

8. Profilé (12) selon une des revendications 5 à 7, **caractérisé en ce que** ledit second composite qui est surmoulé sur ladite au moins une portion (13) recouvre en outre par ce surmoulage des bords (21) longitudinaux (31) et/ou transversaux (32) du profilé, de sorte à masquer des fibres apparentes sur ces bords.

9. Profilé (12) selon une des revendications précédentes, **caractérisé en ce qu'**il est constitué d'une unique dite portion (13) sensiblement en « U » dont lesdites ailes (15 et 16) se terminent sensiblement à angle droit par deux rebords (25 et 26) respectifs s'étendant à l'opposé l'un de l'autre, ces rebords étant pourvus de moyens de fixation (24) à un support (3) recevant le profilé, de sorte que ce support et le profilé le surmontant forment une traverse (11) d'une grille apte à supporter un circuit de fluide et/ou un harnais électrique.

10. Profilé (12) selon la revendication 9, **caractérisé en ce que** lesdits moyens de fixation (24) comprennent des paires d'équerres (24a, 24b, 24d) s'étendant en vis-à-vis à partir desdits rebords (25 et 26), les deux équerres de chacune desdites paires étant reliées entre elles par un voile transversal (27) de préférence surmoulé qui rigidifie ces équerres.

11. Profilé (12) selon la revendication 10, **caractérisé en ce que** l'un au moins de ces voiles transversaux de rigidification (27) supporte un collier de fixation par serrage (28) d'un organe (29) tel qu'un tuyau ou un toron de câbles, ce collier étant de préférence surmoulé d'un seul tenant avec le voile le supportant.

12. Profilé (12) selon une des revendications 5 à 8 et selon une des revendications 9 à 11, **caractérisé en ce que** ledit second composite qui est surmoulé sur ladite au moins une portion (13) forme en outre par ce surmoulage des zones d'appui (24c) telles que des bossages sous lesdits moyens de fixation (24) du profilé, ces zones d'appui étant aptes à caler le profilé sur une autre pièce similaire.

13. Elément de structure porteuse d'un véhicule, cet élément étant par exemple un longeron, une traverse, un raidisseur structural ou une grille apte à supporter un circuit de fluide et/ou un harnais électrique et comprenant des longerons et des traverses (11), **caractérisé en ce que** cet élément comporte un profilé tel que défini à l'une des revendications précédentes.

14. Procédé de fabrication d'un profilé (12) selon une des revendications 1 à 12, **caractérisé en ce qu'**il comprend une solidarisation dudit au moins un croisillon (18) avec ladite au moins une portion (13) sensiblement en « U » par surmoulage, moulage, soudage ou collage.

15. Procédé selon la revendication 14, **caractérisé en ce que** ledit profilé (12) est selon une des revendications 4 à 8, ladite au moins une portion (13) sensiblement en « U » étant façonnée par estampage ou via un moulage par compression, et ledit au moins un croisillon (18) étant solidarisé avec cette portion par surmoulage, moulage par exemple par bi-injection ou par compression.

## Patentansprüche

1. Profil (12), das mindestens einen Abschnitt (13) von im Wesentlichen "U"-förmigem Querschnitt umfasst, der einen von zwei Flügeln (15 und 16) begrenzten Schlitz (17) und eine Seele (14) aufweist, die diese miteinander verbindet, und der stellenweise mit Mitteln versehen ist, die dazu in der Lage sind, diesen bei Torsion (18) zu versteifen, wobei das Profil aus einem mit Fasern verstärkten Kunststoffverbundwerkstoff besteht, wobei diese Mittel zur stellenweisen Versteifung mindestens ein Kreuz (18) umfassen, das in diesem Schlitz einstückig mit diesen Flügeln und dieser Seele gebildet ist, **dadurch gekennzeichnet, dass** die Flügel und die Seele mit Fasern verstärkt sind, die überwiegend in der Längsrichtung des Profils ausgerichtet sind, wobei mehr als 60 % dieser Fasern, die entlang einer Richtung ausgerichtet sind, in einem Winkel im Bereich zwischen -30° und +30° zur Längsrichtung verlaufen.

2. Profil (12) nach Anspruch 1, **dadurch gekennzeichnet, dass** das mindestens eine Kreuz (18) mindestens zwei Rippen (19 und 20) zur Versteifung bei Torsion umfasst, die sich in im Wesentlichen zur Ebene der Seele (14) senkrechten Ebenen im Wesentlichen über die gesamte Höhe des Schlitzes (17) erstrecken, und dadurch, dass die Rippen (19 und 20) vorzugsweise einen gemeinsamen Schnittpunkt in einer mittleren Zone des mindestens einen Kreuzes (18) aufweisen, das im Wesentlichen eine "X"-Form aufweist, deren Spitzen fest mit den Flügeln (15 und 16) verbunden sind.

3. Profil (12) nach einem der vorstehenden Ansprüche, **dadurch gekennzeichnet, dass** der mindestens eine Abschnitt (13) eine Vielzahl von besagten längs beabstandeten Kreuzen (18) aufweist, die weiter dazu in der Lage sind, diesen Abschnitt bei Biegung zu versteifen, wobei diese Kreuze nicht miteinander verbunden sind.

4. Profil (12) nach einem der vorstehenden Ansprüche, **dadurch gekennzeichnet, dass** es aus dem Verbundwerkstoff besteht, der eine thermoplastische Matrix aufweist, wobei das mindestens eine Kreuz (18) durch Abformen, Formen zum Beispiel durch Zweikomponenten-Spritzguss, durch Verpressen, Verschweißen oder Verkleben einstückig mit dem mindestens einen Abschnitt (13) gebildet ist.

5. Profil (12) nach Anspruch 4, **dadurch gekennzeichnet, dass** der mindestens eine Abschnitt (13) aus einem ersten Verbundwerkstoff mit thermoplastischer Matrix besteht, wobei das mindestens eine Kreuz (18) an diesen Abschnitt abgeformt ist und aus einem zweiten Verbundwerkstoff mit thermoplastischer Matrix besteht, die chemisch mit der Matrix des ersten Verbundwerkstoffs kompatibel ist, wobei diese Matrizen vorzugsweise aus der Gruppe ausgewählt sind bestehend aus den Polyphenylensulfiden (PPS), den Polyetheretherketonen (PEEK), den Polyetherketonketonen (PEKK), den Polyamiden (PA), den Polyetherimiden (PEI) und Gemische davon.

6. Profil (12) nach Anspruch 5, **dadurch gekennzeichnet, dass** der erste Verbundwerkstoff mit den Fasern verstärkt ist, die überwiegend in der Längsrichtung des Profils ausgerichtet sind, und die durchgehende Fasern oder aber lange Fasern von mehreren Zentimetern Länge sind, um die Biegesteifigkeit des Profils durch Minimieren seiner Masse zu erhöhen.

7. Profil (12) nach Anspruch 5 oder 6, **dadurch gekennzeichnet, dass**:
- der erste Verbundwerkstoff einen Stapel aus Bahnen umfasst, die mit der thermoplastischen Matrix vorimprägniert und mit Kohlenstoffgeweben verstärkt sind, wobei dieser Stapel an einer Innenfläche des Schlitzes (17) mit einer Bahn endet, die auf Basis derselben Matrix und mit Glasgewebe(n) gefüllt ist, und dadurch, dass
- der zweite Verbundwerkstoff mit vorzugsweise kurzen Glas- oder Kohlenstofffasern verstärkt ist.

8. Profil (12) nach einem der Ansprüche 5 bis 7, **dadurch gekennzeichnet, dass** der zweite Verbundwerkstoff, der an den mindestens einen Abschnitt (13) abgeformt ist, durch dieses Abformen weiter längs- (31) und/oder querverlaufende (32) Kanten (21) des Profils so verdeckt, dass Fasern, die an diesen Kanten sichtbar sind, kaschiert werden.

9. Profil (12) nach einem der vorstehenden Ansprüche, **dadurch gekennzeichnet, dass** es aus einem einzigen besagten, im Wesentlichen "U"-förmigen Abschnitt (13) besteht, dessen Flügel (15 und 16) im Wesentlichen rechtwinklig mit zwei jeweiligen Rändern (25 und 26) enden, die sich einander gegenüberliegend erstrecken, wobei diese Ränder mit Mitteln zum Befestigen (24) an einem Träger (3) versehen sind, der das Profil so aufnimmt, dass dieser Träger und das Profil, das ihn überragt, einen Querträger (11) eines Gitters bilden, das dazu in der Lage ist, einen Fluidkreislauf und/oder einen elektrischen Kabelbaum zu tragen.

10. Profil (12) nach Anspruch 9, **dadurch gekennzeichnet, dass** die Befestigungsmittel (24) Winkelpaare (24a, 24b, 24d) umfassen, die sich einander zugewandt von den Rändern (25 und 26) ausgehend erstrecken, wobei die zwei Winkel jedes der Paare mit einem vorzugsweise abgeformten Quersteg (27) miteinander verbunden sind, der diese Winkel versteift.

11. Profil (12) nach Anspruch 10, **dadurch gekennzeichnet, dass** mindestens eines dieser Versteifungs-Querstege (27) eine Schelle zum Befestigen durch Einspannen (28) eines Organs (29), wie etwa eines Rohrs oder eines Kabelstrangs trägt, wobei diese Schelle vorzugsweise einstückig mit dem Steg, der sie trägt, abgeformt ist.

12. Profil (12) nach einem der Ansprüche 5 bis 8 und nach einem der Ansprüche 9 bis 11, **dadurch gekennzeichnet, dass** der zweite Verbundwerkstoff, der an den mindestens einen Abschnitt (13) abgeformt ist, durch dieses Abformen weiter Auflagezonen (24c) wie etwa Erhebungen unter den Befestigungsmitteln (24) des Profils bildet, wobei diese Auflagezonen dazu in der Lage sind, das Profil an einem anderen ähnlichen Teil zu verkeilen.

13. Lastentragendes Strukturelement eines Fahrzeugs, wobei dieses Element zum Beispiel ein Längsträger, ein Querträger, eine strukturelle Aussteifung oder ein Gitter ist, das dazu in der Lage ist, einen Fluidkreislauf und/oder einen elektrischen Kabelbaum zu tragen, und Längsträger und Querträger (11) umfasst, **dadurch gekennzeichnet, dass** dieses Element ein Profil wie in einem der vorstehenden Ansprüche definiert umfasst.

14. Verfahren zur Herstellung eines Profils (12) nach einem der Ansprüche 1 bis 12, **dadurch gekennzeichnet, dass** es eine durch Abformen, Formen, Verschweißen oder Verkleben feste Verbindung des mindestens einen Kreuzes (18) mit dem mindestens einen im Wesentlichen "U"-förmigen Abschnitt (13) umfasst.

15. Verfahren nach Anspruch 14, **dadurch gekennzeichnet, dass** das Profil (12) nach einem der Ansprüche 4 bis 8 ist, wobei der mindestens eine im Wesentlichen "U"-förmige Abschnitt (13) durch Stanzen oder über ein Druckformen gefertigt ist, wobei das mindestens eine Kreuz (18) durch Abformen, Formen zum Beispiel durch Zweikomponenten-Spritzguss, oder durch Verpressen fest mit diesem Abschnitt verbunden ist.

## Claims

1. Profile (12) comprising at least one portion (13) of cross-section substantially U-shaped which has a groove (17) delimited by two wings (15 and 16) and a core (14) connecting them to one another and which is locally provided with torsional stiffening means (18), the profile being constituted of a fibre-reinforced plastic composite, these local stiffening means comprising at least one crosspiece (18) formed in this groove from one single piece with the wings and the core, **characterised in that** said wings and said core are reinforced with fibres mainly oriented in the longitudinal direction of the profile, with more than 60% of these fibres oriented in a direction forming an angle of between -30° and +30° with respect to said longitudinal direction.

2. Profile (12) according to claim 1, **characterised in that** said at least one crosspiece (18) comprises at least two ribs (19 and 20) of torsional stiffening that extend in planes substantially perpendicular to the plane of said core (14) substantially over the entire height of said groove (17), and preferably **in that** said ribs (19 and 20) present a shared intersection in the median zone of said at least one crosspiece (18), which has substantially an X-shape, of which the tips are secured to said wings (15 and 16).

3. Profile (12) according to one of the preceding claims, **characterised in that** said at least one portion (13) has a plurality of said crosspieces (18), longitudinally spaced apart which are furthermore capable of stiffening in torsion this portion, the crosspieces not being connected to one another.

4. Profile (12) according to one of the preceding claims, **characterised in that** it is constituted of said composite which has a thermoplastic matrix, said at least one crosspiece (18) being formed from one single piece with said at least one portion (13) by overmoulding, moulding for example by bi-injection moulding, by compression, by welding or by bonding.

5. Profile according to claim 4, **characterised in that** said at least one portion (13) is constituted of a first thermoplastic matrix composite, said at least one crosspiece (18) being overmoulded on this portion and being constituted of a second thermoplastic matrix composite chemically compatible with the matrix of the first composite, these matrixes being preferably selected from the group constituted by polyphenylene sulphides (PPS), polyether ether ketones (PEEK), polyetherketoneketones (PEKK), polyamides (PA), polyetherimides (PEI), and mixtures thereof.

6. Profile (12) according to claim 5, **characterised in that** said first composite is reinforced by said fibres that are mainly oriented in the longitudinal direction of the profile and that are continuous fibres or fibres of several centimetres in length, so as to increase the flexural rigidity of the profile while minimising the weight thereof.

7. Profile (12) according to claim 5 or 6, **characterised in that**:
- said first composite comprises a stack of pre-impregnated sheets of said thermoplastic matrix and reinforced with carbon fibre fabrics, this stack ending at an inner surface of said groove (17) by a sheet at the base of said matrix and loaded with glass fibre fabrics, and **in that**
- said second composite is reinforced with glass fibres or carbon fibres, preferably short.

8. Profile (12) according to any one of claims 5 to 7, **characterised in that** said second composite which is overmoulded on said at least one portion (13), furthermore covers by overmoulding the longitudinal (31) and/or transversal (32) sides (21) of the profile, so as to mask the fibres that are visible on these sides.

9. Profile (12) according to one of the preceding claims, **characterised in that** it is constituted of a single said portion (13) substantially U-shaped, of which said wings (15 and 16) end substantially at a right angle by two respective edges (25 and 26) extending opposite one another, these edges being provided with attachment means (24) to a support (3) receiving the profile, such that this support and the profile surmounting it form a sleeper (11) of a grid capable of supporting a fluid circuit and/or an electrical harness.

10. Profile (12) according to claim 9, **characterised in that** said attachment means (24) comprise pairs of brackets (24a, 24b, 24d) extending opposite from said edges (25 and 26), both brackets of each said pair being connected to one another by a transversal shroud (27), preferably overmoulded which rigidifies these brackets.

11. Profile (12) according to claim 10, **characterised in that** at least one of these transversal stiffening shrouds (27) supports a clamping ring (28) of a member (29) such as a pipe or a cable strand, this clamping ring being preferably overmoulded in a single part with the shroud supporting it.

12. Profile (12) according to one of claims 5 to 8 and according to one of claims 9 to 11, **characterised in that** said second composite which is overmoulded on said at least one portion (13) also forms by said overmoulding support zones (24c) such as bosses under said attachment means (24) of the profile, these support zones being capable of wedging the profile on another similar part.

13. Element of a bearing structure of a vehicle, this element being for example a stringer, a sleeper, a structural stiffener, or a grid capable of supporting a fluid circuit and/or an electrical harness and comprising stringers and sleepers (11), **characterised in that** this element comprises a profile such as defined in one of the preceding claims.

14. Method for manufacturing a profile (12) according to one of claims 1 to 12, **characterised in that** it comprises a securing of said at least one crosspiece (18) with said at least one portion (13), substantially U-shaped by overmoulding, moulding, welding or bonding.

15. Method according to claim 14, **characterised in that** said profile (12) is according to one of claims 4 to 8, said at least one portion (13) substantially U-shaped being manufactured by stamping or via a compression moulding, and said at least one crosspiece (18) being secured to this portion by overmoulding, moulding for example by bi-injection moulding or by compression.
